# EUROPEAN PATENT APPLICATION

(11) **EP 2 033 708 A1**
(43) Date of publication of application: **11.03.2009**
(21) Application number: 07745262.1
(22) Date of filing: 14.06.2007
(51) Int. Cl.: B01J 19/08, C02F 1/48, F24F 6/00, F24F 6/14, F24F 13/22

(54) **LIQUID TREATING APPARATUS, AIR-CONDITIONING APPARATUS, AND HUMIDIFIER**

(30) Priority: 15.06.2006 JP 2006166233
(71) Applicant: Daikin Industries, Ltd., Osaka-shi, Osaka 530-8323 (JP)
(72) Inventor: MOTEGI, Kanji, Sakai-shi, Osaka 591-8511 (JP); ODO, Tsunahiro, Sakai-shi, Osaka 591-8511 (JP); TANAKA, Toshio, Sakai-shi, Osaka 591-8511 (JP); AKIYAMA, Ryuji, Sakai-shi, Osaka 591-8511 (JP)
(74) Representative: HOFFMANN EITLE
(86) International application number: PCT/JP2007/062005
(87) International publication number: WO 2007/145280

(57) **Abstract**

In a liquid treatment apparatus, a discharge electrode (31) and an ejector (32) are arranged face to face with each other. An electric power supply (33) establishes an electric potential difference between the discharge electrode (31) and the ejector (32). As a result, a streamer discharge occurs from the discharge electrode (31) towards liquid droplets (32a) emitted from the ejector (32). Active species produced in association with the generation of the steamer discharge are absorbed in the liquid droplets (32a), whereby the treatment target water (32a) is sterilized and purified.

## Description

### TECHNICAL FIELD

The present invention relates to a liquid treatment apparatus for the treatment of liquid. This invention further relates to an air conditioning system and to a humidifier, both of which incorporate therein such a liquid treatment apparatus.

### BACKGROUND ART

Liquid treatment apparatuses of the type that are used for, for example, the purification of treatment target liquids have been widely known in the art. For example, JP-A-2004-108685 (hereinafter referred to as the "patent document,") discloses a liquid treatment apparatus for the purification of condensate water recovered in a drain pan of an air conditioning system.

The air conditioning system of this patent document is provided, in its indoor unit, with a heat exchanger. Air to be treated is cooled in the heat exchanger, as a result of which moisture contained in the air condenses and condensate water is produced. In view of this, such a type of air conditioning system is provided, under the heat exchanger, with a drain pan for the recovery of the condensate water.

However, if the condensate water remains accumulated in the drain pan over a long period of time, this results in the growth of bacteria in the condensate water. This contributes to the pollution of the condensate water and the emission of unpleasant odors. To cope with this, in the patent document, the condensate water accumulated in the drain pan is purified using ultraviolet light.

More specifically, an ultraviolet irradiation unit is arranged in the vicinity of the drain pan in the air conditioning system of the patent document. Ultraviolet light is emitted from the ultraviolet irradiation unit towards the condensate water, whereby the condensate water is sterilized. As a result, in the air conditioning system of the patent document, the condensate water is purified and its quality is improved, and the emission of unpleasant odors from the condensate water is also suppressed.

### DISCLOSURE OF THE INVENTION

### PROBLEMS THAT THE INVENTION INTENDS TO OVERCOME

In the case where, as in the patent document, the condensate water is treated with the aid of ultraviolet light, there are limits to the power to sterilize bacteria in the condensate water and the power to purify the condensate water and, in addition, there is the possibility that the air conditioning system will have to grow in size because the size of the ultraviolet irradiation unit is large. In addition, there are various methods known in the art, such as the application of antibacterial treatment to the surface of the drain pan and the treatment of sterilization to the condensate water by the addition of medical agents thereto. However, there are limits to the durability of the power to sterilize bacteria, and it is impossible to ensure the quality of the condensate water for long periods. Accordingly, in the field of the treatment of liquids such as condensate water, there are increasing demands for liquid treatment apparatuses which are capable of effective bacteria sterilization and purification and are compact in size.

In view of the problems as described above, the present invention was made. Accordingly, an object of the present invention is to provide a liquid treatment apparatus whose purification power is extremely high.

### MEANS FOR OVERCOMING THE PROBLEMS

The present invention provides, as a first aspect, a liquid treatment apparatus for the purification of a treatment target liquid (32a). And the liquid treatment apparatus of the first aspect includes an ejector (32) which emits the treatment target liquid (32a), a discharge electrode (31) which generates an electric discharge towards the treatment target liquid (32a) emitted from the ejector (32), and an electric power supply (33) which establishes an electric potential difference between the treatment target liquid (32a) emitted from the ejector (32) and the discharge electrode (31).

In the first aspect of the present invention, the electric power supply (33) establishes an electric potential difference between the treatment target liquid (32a) emitted from the ejector (32) and the discharge electrode (31). As a result, an electric discharge is generated from the discharge electrode (31) to the treatment target liquid (32a) emitted from the ejector (32). With the generation of the electric discharge, active species such as radicals are produced in the air. These active species are absorbed in the treatment target liquid (32a), as a result of which the treatment target liquid (32a) is sterilized and pollutants in the treatment target liquid (32a) are oxidatively decomposed. As a result, the treatment target liquid (32a) is purified.

The present invention provides, as a second aspect according to the aforesaid first aspect, a liquid treatment apparatus that is characterized in that there is generated a streamer discharge.

In the second aspect of the present invention, the streamer discharge occurs from the discharge electrode (31) towards the treatment target liquid (32a) emitted from the ejector (32). As compared to other types of electric discharges (for example, glow discharge, corona discharge et cetera), the electric field density in the electric discharge field becomes higher in the streamer discharge. As a result, the amount of active species that are generated in the air with the generation of the electric discharge also increases. In the streamer discharge, fast electrons, ions, ozone, radicals (such as hydroxyl radicals), and other excited molecules (excited oxygen molecules, excited nitrogen molecules, excited water molecules et cetera) are generated as the active species. The active species are absorbed in the treatment target liquid (32a), whereby the treatment target liquid (32a) is effectively sterilized, and pollutants present in the treatment target liquid (32a) are effectively oxidatively decomposed.

The present invention provides, as a third aspect according to either the aforesaid first or second aspect, a liquid treatment apparatus that is characterized in that the ejector (32) is configured such that it emits the treatment target liquid in the form of granular liquid droplets (32a).

In the third aspect of the present invention, the treatment target liquid (32a) is emitted in the form of fine granular liquid droplets from the ejector (32). An electric discharge advances from the discharge electrode (31) towards the granular liquid droplets (32a).

More specifically, for example, in the case where the discharge electrode (31) serves as a positive side while the ejector (32) serves as a negative side, the ejector (32) emits the liquid droplets (32a) that are electrically negatively charged. Then, an electronic avalanche occurs from the liquid droplets (32a) towards the discharge electrode (31) that is electrically positively charged and, as a result, the liquid droplets (32a) lose their negative electric charges. On the other hand, a minute electric arc, which is called a "leader" of positive electric charge, advances from the discharge electrode (31) to the liquid droplets (32a). In the streamer discharge, a series of cycles ("electronic avalanche generation" → "leader formation" → "leader extinction" → "electronic avalanche generation" and so on) is repeatedly performed as described above.

Here, in the case where the ejector emits a continuous string of treatment target liquid and a minute electric arc advances to the emitted treatment target liquid, the electric discharge current increases and a so-called electric spark (spark discharge) is likely to occur. In the present invention, however, the treatment target liquid is in the form of fine grains, that is, the treatment target water is comprised of the liquid droplets (32a). And minute air gaps are defined between the liquid droplets (32a). Consequently the air gaps impede the flow of discharge current, thereby preventing the occurrence of electric sparking. In the present invention, the above-described series of cycles of the streamer discharge is repeatedly performed in ideal form. As a result, there is generated from the discharge electrode (31) towards the liquid droplets (32a) a plasma column with intensive luminescence, whereby the streamer discharge becomes stabilized.

The present invention provides, as a fourth aspect according to any one of the aforesaid first to third aspects, a liquid treatment apparatus that is characterized in that the ejector (32) is configured such that it emits the treatment target liquid (32a) towards the discharge electrode (31), and that the tip of the discharge electrode (31) is directed towards the ejector (32).

In the fourth aspect of the present invention, the direction in which the electric discharge generated from the discharge electrode (31) advances and the direction in which the ejector (32) emits the treatment target liquid (32a) are opposite to each other. As a result, the efficiency of gas-liquid contact between the treatment target liquid (32a) and the active species is improved to a further extent.

The present invention provides, as a fifth aspect according to the aforesaid fourth aspect, a liquid treatment apparatus that is characterized in that the ejector (32) is configured such that it emits the treatment target liquid (32a) in the shape of a hollow circular cone, and that the tip of the discharge electrode (31) lies inside the treatment target liquid (32a) spread in the shape of the aforesaid hollow circular cone.

In the fifth aspect of the present invention, the treatment target liquid (32a) is emitted from the ejector (32) such that it envelops therein the tip of the discharge electrode (31). Consequently, an electric discharge with a flared spread occurs from the tip of the discharge electrode (31) towards the treatment target liquid (32a) therearound.

The present invention provides, as a sixth aspect according to any one of the aforesaid first to fifth aspects, a liquid treatment apparatus that is characterized in that the ejector (32) is configured such that it emits the treatment target liquid (32a) containing water.

In the sixth aspect of the present invention, the treatment target liquid (32a) emitted from the ejector (32) contains water (H₂O). Here, with respect to the generation of radicals in association with the generation of electric discharge, it is known that OH radicals having especially strong oxidative power are produced with the aid of the presence of H₂O. In view of this, in the present invention, the electric discharge occurs towards the water contained in the treatment target liquid (32a) to increase the amount of generation of OH radicals, whereby not only the power to sterilize bacteria in the treatment target liquid (32a) but also the power to oxidatively decompose pollutants in the treatment target liquid (32a) is enhanced.

The present invention provides, as a seventh aspect, an air conditioning apparatus which includes a cooler means (46) for the cooling of air to be treated, a drain pan (48) for the recovery of moisture condensed in the cooler means (46), and a liquid treatment apparatus for the purification of condensate water recovered in the drain pan (48). And, the air conditioning system is characterized in that the liquid treatment apparatus is formed by any one of the liquid treatment apparatuses (30) of the aforesaid first to sixth aspects.

In the air conditioning system of the seventh aspect, the air to be treated is cooled by the cooler means (46) to thereby provide cooling of, for example, an indoor space. The air to be treated is cooled in the cooler means (46), whereby moisture condenses. The moisture is recovered in the drain pan (48) as condensate water.

Here, if the condensate water lingers in the drain pan (48) over a long period of time, this causes the growth of bacteria in the condensate water, resulting in the emission of unpleasant odors and the pollution of the condensate water. To cope with this, in the present invention, the liquid treatment apparatus (30) according to any one of the aforesaid first to sixth aspects is used to purify the condensate water (32a) as a treatment target liquid.

More specifically, in the liquid treatment apparatus (30), the condensate water (32a) is emitted from the ejector (32) and an electric discharge occurs from the discharge electrode (31) towards the emitted condensate water (32a). As a result, active species generated in association with the generation of the electric discharge are absorbed in the condensate water (32a), whereby the condensate water (32a) is sterilized and purified.

The present invention provides, as an eighth aspect according to the aforesaid seventh aspect, an air conditioning system that is characterized in that the liquid treatment apparatus (30) releases, into the air to be treated, the condensate water (32a) emitted from the ejector (32) so that the air to be treated is humidified.

In the eighth aspect of the present invention, the condensate water (32a) emitted from the ejector (32) absorbs the active species generated in association with the generation of the electric discharge, whereby the condensate water (32a) is purified. Thereafter, the condensate water (32a), now purified, is released, as it is, to the air to be treated. That is, in the air conditioning system of the present invention, the condensate water (32a) treated in the liquid treatment apparatus (30) is used to humidify the air to be treated.

The present invention provides, as a ninth aspect, a humidifier that includes a humidification water tank (65) for the storage of humidification water that is released into air to be treated and a liquid treatment apparatus intended for the humidification water (32a) in the humidification water tank (65). And, the humidifier of the ninth aspect is characterized in that the liquid treatment apparatus is formed by any one of the liquid treatment apparatuses (30) of the aforesaid first to sixth aspects.

The humidifier of the ninth aspect is capable of humidification of air to be treated, by the releasing of the humidification water to the air to be treated. The humidification water tank (65) holds the humidification water used for the humidification of the air to be treated. Here, if the humidification water lingers in the humidification water tank (65) over long periods, this causes the growth of bacteria in the humidification water, thereby degrading the quality of the humidification water. If such degraded humidification water is released to the air, this pollutes the space to be humidified. This is undesirable for hygienic reasons. To cope with this, in the humidifier of the present invention, the liquid treatment apparatus (30) according to any one of the first to sixth aspects is employed to purify the humidification water (32a) as a treatment target liquid.

More specifically, in the liquid treatment apparatus (30), the humidification water (32a) is emitted from the ejector (32) and an electric discharge occurs from the discharge electrode (31) towards the emitted humidification water (32a). As a result, active species generated in association with the generation of the electric discharge are absorbed in the humidification water (32a), whereby the humidification water (32a) is sterilized and purified.

The present invention provides, as a tenth aspect, a humidifier that is characterized in that the humidifier includes any one of the liquid treatment apparatuses (30) of the first to sixth aspects, and that the liquid treatment apparatus (30) releases, into air to be treated, humidification water (32a) emitted from the ejector (32) so that the air to be treated is humidified.

In the tenth aspect of the present invention, the treatment target liquid (32a) emitted from the ejector (32) absorbs the active species generated in association with the generation of the electric discharge, whereby the treatment target liquid (32a) is purified. Thereafter, the treatment target liquid, now purified, is released, as it is, to the air to be treated, whereby the air to be treated is humidified.

### ADVANTAGEOUS EFFECTS OF THE INVENTION

In the present invention, electric discharge is generated towards the treatment target liquid (32a) emitted from the ejector (32), whereby active species generated in association with the generation of the electric discharge are absorbed in the treatment target liquid (32a). Consequently, in accordance with the present invention, it becomes possible to effectively destroy bacteria present in the treatment target liquid (32a). In addition, it becomes possible to effectively oxidatively decompose pollutants present in the treatment target liquid (32a). Accordingly, the liquid treatment apparatus of the present invention has extremely high purification power against the treatment target liquid (32a).

In addition, the electric discharge is generated directly to the treatment target liquid (32a), which makes it possible to physically destroy the bacteria in the treatment target liquid (32a) by the force of impact of the electric discharge. Accordingly, it becomes possible to enhance the bacteria sterilization power of the liquid treatment apparatus.

Especially, in the second aspect of the present invention, streamer discharge occurs from the discharge electrode (31) to the treatment target liquid (32a). The amount of generation of active species by the streamer discharge is greater as compared to other types of electric discharges, thereby making it possible to enhance the power to sterilize bacteria in the treatment target liquid (32a) and the power to purify the treatment target liquid (32a).

In addition, when a streamer discharge occurs from the discharge electrode (31) towards the treatment target liquid (32a), a current of ionic wind is produced in the same direction as the direction of the streamer discharge. In the second aspect of the present invention, the efficiency of gas-liquid contact between the active species and the treatment target liquid (32a) is improved by the ionic wind, whereby the active species are efficiently absorbed in the treatment target liquid (32a). Therefore, in accordance with the present invention, the purification power of the liquid treatment apparatus can be enhanced to a further extent.

Furthermore, in the third aspect of the present invention, the fine granular liquid droplets (32a) are emitted from the ejector (32) and an electric discharge is generated to the liquid droplets (32a). Consequently, in accordance with the third aspect of the present invention, the occurrence of electric sparking is prevented by the action of an air gap created between each liquid droplet (32a), whereby the electric discharge can be stabilized. Therefore, in accordance with the third aspect of the present invention, the amount of generation of active species is stabilized, whereby the purification power of the liquid treatment apparatus can also be stabilized.

In addition, in the third aspect of the present invention, the fine, granular liquid droplets (32a) contact with the active species. Therefore, in accordance with the third aspect of the present invention, the active species are easily absorbed in the liquid droplets (32a), whereby the power to purify the treatment target liquid (32a) can be enhanced to a further extent.

In the fourth aspect of the present invention, the discharge electrode (31) and the ejector (32) are arranged face to face with each other. Therefore, in accordance with the fourth aspect of the present invention, the efficiency of gas-liquid contact between the treatment target liquid (32a) and the active species is improved to a further extent, whereby the purification power of the liquid treatment apparatus can be enhanced.

In addition, in the fourth aspect of the present invention, the treatment target liquid (32a) emitted from the ejector (32) spatters towards the discharge electrode (31). Consequently, dust particles or contaminants adhering to the surface of the discharge electrode (31) can be removed therefrom by the treatment target liquid (32a). Therefore, in accordance with the fourth aspect of the present invention, the frequency of cleaning and replacement of the discharge electrode (31) can be reduced.

In addition, the treatment target liquid (32a) adhering to the surface of the discharge electrode (31) rides on a flow of ionic wind travelling towards the ejector (32) from the discharge electrode (31) and tends to gather on the tip of the discharge electrode (31). As a result, a film of liquid is formed on the tip of the discharge electrode (31). This impedes a rise in the temperature of the tip of the discharge electrode (31) in spite of the generation of the electric discharge, thereby preventing the occurrence of melting/oxidation of the tip of the discharge electrode (31). Therefore, in accordance with the fourth aspect of the present invention, the degradation/wear damage to the tip of the discharge electrode (31) can be prevented. This results in a reduction in the frequency of replacement of the discharge electrode (31).

Furthermore, if the tip of the discharge electrode (31) is prevented from undergoing wear damage (corrosion) as described above, this makes it possible to maintain the distance (design distance) between the discharge electrode (31) and the ejector (32) constant. To sum up, it is prevented in the fourth aspect of the present invention that the design distance expands with the corrosion of the discharge electrode (31). As a result, the desired electric discharge can be maintained over a long period of time.

It is arranged in the fifth aspect of the present invention such that the ejector (32) emits the treatment target liquid (32a) in the shape of a hollow circular cone so that the tip of the discharge electrode (31) lies inside the treatment target liquid (32a) spread in the shape of that hollow circular cone. Therefore, in accordance with the present invention, the electric discharge flaringly expands from the tip of the discharge electrode (31) toward the treatment target liquid (32a) therearound, whereby it becomes possible to widely generate active species.

In addition, it is prevented in the present invention that the treatment target liquid (32a) emitted from the discharge electrode (31) directly hits the tip of the discharge electrode (31), whereby it becomes possible to stabilize the electric discharge.

It is arranged in the sixth aspect of the present invention such that the treatment target liquid (32a) emitted from the ejector (32) contains water (H₂O). Therefore, in accordance with the sixth aspect of the present invention, active species having high sterilization power and oxidizing power, such as hydroxyl radical (OH radical), hydroperoxide (HO₂), hydrogen peroxide (H₂O₂) et cetera, can be generated in association with the generation of the electric discharge, whereby it becomes possible to further enhance the power to purify the treatment target liquid (32a).

It is arranged in the seventh aspect of the present invention that the liquid treatment apparatus (30) according to any one of the first to sixth aspects of the present invention is used for the purification of the condensate water (32a) in the air conditioning system. Therefore, in accordance with the seventh aspect of the present invention, it becomes possible to keep the condensate water (32a) clean at all times, thereby avoiding the emission of unpleasant odors from the condensate water (32a) and the pollution of the condensate water (32a). Besides, the liquid treatment apparatus (30) can be designed so that it has extremely superior purification power, and is compact in size, and the air conditioning system, even when the liquid treatment apparatus (30) is mounted therein, will not grow in size.

It is arranged in the eighth aspect of the present invention such that the condensate water (32a) after treatment in the liquid treatment apparatus (30) is used for the humidification of air to be treated. Therefore, in accordance with the present invention, there is no need to provide any drain mechanism for the drainage of condensate water accumulated in the drain pan (48), and it is possible to make the drain pan (48) small in size. In addition, since the condensate water (32a) that is supplied to the air has already been purified in the liquid treatment apparatus (30), the space to which the humidified air is supplied will not be polluted. In addition, there is the possibility that the condensate water contains active species remaining unreacted. Therefore, by the supplying of the air containing such condensate water to the space, such as an indoor space, it becomes possible to accomplish bacteria elimination and deodorizing in the indoor space or the like.

It is arranged in the ninth aspect of the present invention such that the liquid treatment apparatus (30) according to any one of the first to sixth aspects of the present invention is used for the purification of the humidification water (32a) in the humidifier. Therefore, in accordance with the eighth aspect of the present invention, it becomes possible to keep the humidification water (32a) clean at all times, thereby avoiding the emission of unpleasant odors from the humidification water (32a) and the pollution of the condensate water (32a). Besides, the liquid treatment apparatus (30) can be designed so that it has extremely superior purification power, and is compact in size, and the humidifier, even when the liquid treatment apparatus (30) is mounted therein, will not grow in size.

It is arranged in the tenth aspect of the present invention such that the treatment target water (32a) after purification in the liquid treatment apparatus (30) is released to the air to be treated, whereby the air to be treated is humidified. Therefore, in accordance with the present invention, clean moisture is given to the air to be treated, as a result of which the space to be humidified will not be polluted. In addition, there are residual active species in the treatment target water (32a) that is given to the air to be treated. Therefore, by the supply of the air containing such treatment target water (32a) to the space to be humidified, it becomes possible to accomplish bacteria elimination and deodorizing in the space.

### BRIEF DESCRIPTION OF THE DRAWINGS

FIG. 1 is a schematic configuration diagram of a water treatment system according to a first embodiment of the present invention.
FIG. 2, which is comprised of FIG. 2(A) and FIG. 2(B), is an explanatory diagram providing an illustration of the mechanism of the streamer discharge.
FIG. 3 is a schematic configuration diagram of an indoor unit of an air conditioning system according to a second embodiment of the present invention.
FIG. 4 is a schematic configuration diagram of a drain pan and a liquid treatment apparatus.
FIG. 5 is a schematic configuration diagram of an indoor unit of an air conditioning system according to a modification of the second embodiment.
FIG. 6 is a schematic configuration diagram of a drain pan and a liquid treatment apparatus.
FIG. 7 is a schematic configuration diagram of an air conditioning system according to a third embodiment of the present invention.
FIG. 8 is a schematic configuration diagram of a humidification water tank and a liquid treatment apparatus.
FIG. 9 is a schematic configuration diagram of an air conditioning system according to a modification of the third embodiment.
FIG. 10 is a schematic configuration diagram of a humidifier according to a fourth embodiment of the present invention.
FIG. 11 is a schematic configuration diagram of a humidifier according to a modification of the fourth embodiment.
FIG. 12 is a schematic configuration diagram of a liquid treatment apparatus according to a first example of another embodiment of the present invention.
FIG. 13 is a schematic configuration diagram of a liquid treatment apparatus according to a second example of the other embodiment.
FIG. 14 is a schematic configuration diagram of a liquid treatment apparatus according to a third example of the other embodiment.
FIG. 15 is a schematic configuration diagram of a liquid treatment apparatus according to a fourth example of the other embodiment.
FIG. 16, which is comprised of FIG. 16(A) and FIG. 16(B), is a schematic configuration diagram of an ejector of the fourth example of the other embodiment, wherein FIG. 16(A) is a top plan view providing an illustration before the bending of needle parts and
FIG. 16(B) is a side view providing an illustration after the bending of the needle parts.

### REFERENCE NUMERALS IN THE DRAWINGS

- 10: water treatment system
- 30: liquid treatment apparatus
- 31: discharge electrode
- 32: ejector
- 32a: treatment target water; liquid droplet; condensate water; humidification water (treatment target liquid)
- 33: electric power supply
- 40: air conditioning system
- 46: cooler means
- 48: drain pan
- 65: humidification water tank

### BEST MODE FOR CARRYING OUT THE INVENTION

Hereinafter, with reference to the accompanying drawings, exemplary embodiments of the present invention will be described in detail.

### FIRST EMBODIMENT OF THE INVENTION

A liquid treatment apparatus (30) according to a first embodiment of the present invention finds application in a water treatment system (10) which is intended for the treatment of treatment target liquid (treatment target water) such as industrial treatment target water, sewage water et cetera.

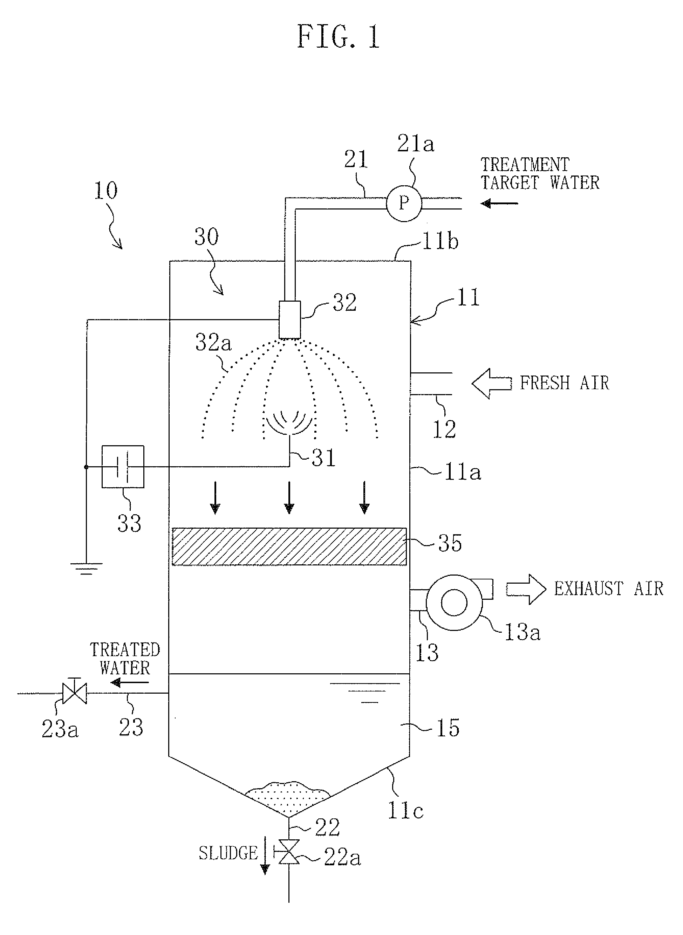

As illustrated in FIG.1, the water treatment system (10) is provided with a hollow, vertically-elongated liquid treatment tower (11). The liquid treatment tower (11) is composed of a body (11a) shaped like a circular cylinder, a top plate (11b) formed on the upper end of the body (11 a), and a bottom plate (11c) shaped like a circular cone and projecting downwardly from the body (11a). In addition, a reaction tank (15) in which to temporarily store treatment target water is formed in the bottom of the liquid treatment tower (11).

The liquid treatment tower (11) is provided, in the side of the body (11a), with an air supply opening (12) and an air exhaust opening (13). The air supply opening (12) is for the introduction of fresh air into the liquid treatment tower (11). On the other hand, the air exhaust opening (13) is for the exhaustion of air from within the liquid treatment tower (11) to outside the room. The air exhaust opening (13) is provided with an air exhaust fan (13 a) for the exhaustion of air.

A treatment target water supply pipe (21) is passed completely through the top of the top plate (11b) of the liquid treatment tower (11). The treatment target water supply pipe (21) is for the introduction of treatment target water (e.g., polluted water discharged from a plant or other like facility) into the liquid treatment tower (11). The treatment target water supply pipe (21) is provided with a liquid supply pump (21a) for the conveyance of treatment target water. In addition, the liquid supply pump (21a) is provided, at its outflow end, with an ejector (32). The ejector (32) will be fully described later.

A sludge discharge pipe (22) is connected to the lower end of the bottom plate (11c) of the liquid treatment tower (11). The sludge discharge pipe (22) is for the discharging of sludge deposited on the bottom of the reaction tank (15) to outside the liquid treatment tower (11). The sludge discharge pipe (22) is provided with a first switch valve (22a). In addition, a treated water discharge pipe (23) is connected to a lowered part of the side of the body (11 a) of the liquid treatment tower (11). The treated water discharge pipe (23) is for the discharging of purified treatment target water (treated water) in the liquid treatment tower (11) to outside the liquid treatment tower (11). The treated water discharge pipe (23) is provided with a second switch valve (23a).

The water treatment system (10) is provided, in addition to the liquid treatment apparatus (30), with a demister (35).

The liquid treatment apparatus (30) is intended for the treatment of treatment target water and, more specifically, for the purification of treatment target water. The liquid treatment apparatus (30) includes, in addition to the ejector (32), a discharge electrode (31) and an electric power supply (33). The discharge electrode (31) and the ejector (32) are arranged in an upper portion of the space in the liquid treatment tower (11). The electric power supply (33) is arranged outside the liquid treatment tower (11).

The discharge electrode (31) is rod- or needle-shaped and is held within the liquid treatment tower (11) in a vertically extending position. And the tip (upper end) of the discharge electrode (31) is directed at the ejector (32). The discharge electrode (31) is made of stainless material superior in resistance to water. In addition, the discharge electrode (31) is electrically connected to the positive side of the electric power supply (33).

The ejector (32) is configured for the emission of the treatment target water (32a) supplied from the treatment target water supply pipe (21). The ejector (32) is configured such that the ejector (32) emits treatment target liquid in the form of fine granular liquid droplets (32a). More specifically, the ejector (32) is designed such that the grain diameter of the liquid droplets (32a) ranges from 1 to 20 micrometers.

The ejector (32) has a nozzle which opens downwardly, and is configured so as to emit the treatment target water (32a) towards the discharge electrode (31). That is, the ejector (32) is positioned such that it is directed to the discharge electrode (31). In addition, the ejector (32) is configured such that the pattern of emission of the treatment target water (32a) is in the shape of a hollow circular cone centered on the axis of the discharge electrode (31). And the tip of the discharge electrode (31) lies within the treatment target water (32a) spread in the shape of that hollow circular cone. Furthermore, the ejector (32) is electrically connected to the negative side of the electric power supply (33). That is, the treatment target water (32a) emitted from the ejector (32) is electrically negatively charged.

The electric power supply (33) is formed by a high-voltage electric power supply of the direct-current system. The electric power supply (33) establishes an electric potential difference between the discharge electrode (31) and the treatment target water (32a) emitted from the ejector (32). As a result, in the liquid treatment apparatus (30), streamer discharge occurs from the discharge electrode (31) towards the liquid droplets (32a) emitted from the ejector (32). That is, in the liquid treatment apparatus (30), the liquid droplets (32a) emitted from the ejector (32) function as a counter electrode in a pair with the discharge electrode (31). In addition, the mutual positional relationship between the discharge electrode (31) and the ejector (32) is determined so that desired streamer discharges occur between the discharge electrode (31) and the liquid droplets (32a), depending on the electric potential difference established by the electric power supply (33).

The demister (35) is formed by an impinging plate having a plurality of openings through which the treatment target water is distributable. The demister (35) captures moisture in the air drawn through the air supply opening (12) and then discharged through the air exhaust opening (13). The moisture captured falls downwardly, in the form of liquid droplets, to the reaction tank (15) in the liquid treatment tower (11).

### RUNNING OPERATION

The following is a description of the running operation of the water treatment system (10). During the operation of the water treatment system (10), the air exhaust fan (13a) and the liquid supply pump (21a) are placed in operation and the second switch valve (23a) is opened. In addition, the electric power supply (33) is turned on, whereby there is established between the discharge electrode (31) and the ejector (32) an electric potential difference. The treatment target water disposed of from a plant or other like facility flows through the treatment target water supply pipe (21), and is emitted from the ejector (32). In addition, the fresh air taken in through the air supply opening (12) passes through in the liquid treatment tower (11), and then is expelled out through the air exhaust opening (13).

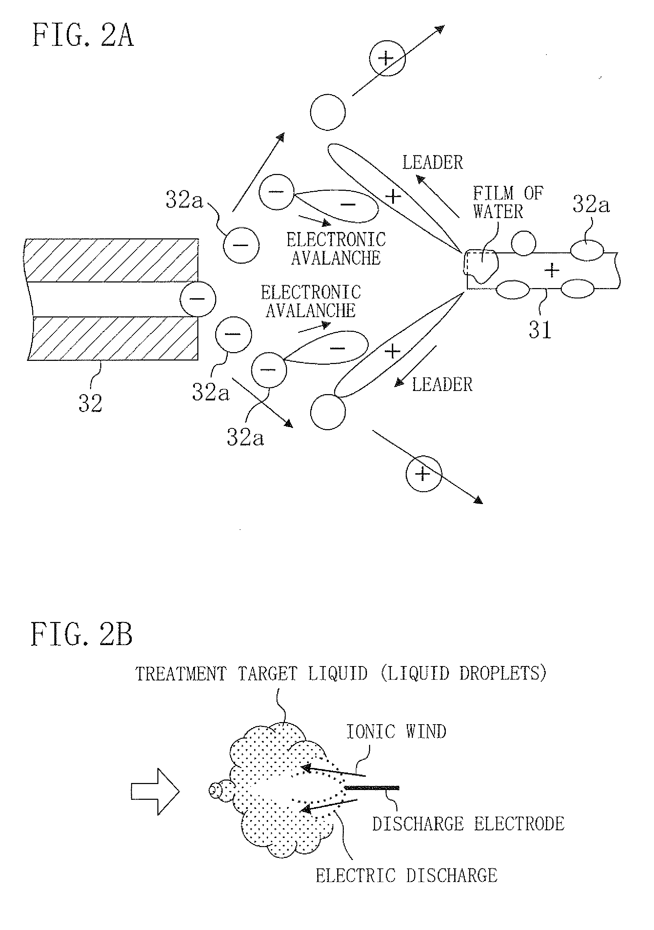

In the liquid treatment apparatus (30), streamer discharge occurs between the liquid droplets (32a) emitted from the ejector (32) and the discharge electrode (31). More specifically, in the liquid treatment apparatus (30), electrically negatively charged treatment target water is induced by an electrical field between the discharge electrode (31) and the ejector (32) and is emitted from the ejector (32) in the form of liquid droplets (32a), as illustrated in FIG. 2(A). An electronic avalanche is produced from the electrically negatively charged liquid droplets (32a) towards the discharge electrode (31) which is the positive side, as a result of which the liquid droplets lose their negative electric charges and enter the electrically neutral state. On the other hand, a minute electric arc (luminous column) which is called the "leader of positive electric charge" advances towards the liquid droplets from the discharge electrode (31) which is the positive side. Here, the electrically negatively charged liquid droplets (32a) are emitted from the ejector (32), in other words, these liquid droplets constantly travel towards the discharge electrode (31). In addition, the liquid droplets (32a) change to fine grains between which are formed air gaps. Consequently, the leader extending from the discharge electrode (31) will not advance to reach the tip of the ejector (32), and it is prevented that a so-called electric spark (spark discharge) is generated between the discharge electrode (31) and the ejector (32).

In the streamer discharge in the liquid treatment apparatus (30), a series of cycles (i.e., "electronic avalanche" → "leader formation" → "leader extinction" → "electronic avalanche" and so on) is repeatedly performed in the manner as described above. This therefore maintains, in the liquid treatment apparatus (30), stable streamer discharge with luminescence.

In addition, the ejector (32) emits the liquid droplets (32a) in a pattern of emission shaped like a hollow circular cone so that the tip of the discharge electrode (31) is enveloped therein. Furthermore, the tip of the discharge electrode (31) lies on the axis of the hollow circular conical emission-pattern of the liquid droplets (32a). Consequently, the minute electric arc uniformly spreads from the tip of the discharge electrode (31) towards the liquid droplets (32a), and there is formed a flare-shaped plasma column with luminescence.

The pattern of emission of the liquid droplets (32a) emitted from the ejector (32) is affected not only by the angle of spray and the pressure of emission of the ejector (32) but also by the ionic wind generated from the discharge electrode (31). That is, when a streamer discharge occurs from the tip of the discharge electrode (31), a current of ionic wind is produced from the discharge electrode (31) towards the ejector (32), as illustrated in FIG. 2(B). Accordingly, the liquid droplets (32a) emitted from the ejector (32) are forced towards the ejector (32) by the ionic wind, thereby facilitating that the pattern of emission of the ejector (32) is shaped like a hollow circular cone. Therefore, such an effect of the ionic wind should be taken into account for the optimal design of the pattern of emission of the ejector (32).

In addition, if ionic wind is generated from the discharge electrode (31) towards the ejector (32), the moisture or the like adhering on the outer peripheral surface of the discharge electrode (31) is pulled by the ionic wind and moved to the tip of the discharge electrode (31). As a result, a film of water is formed on the tip of the discharge electrode (11), as shown in FIG. 2(A). If the tip of the discharge electrode (31) has such a film of water on it, this prevents the tip of the discharge electrode (31) from becoming melted or oxidized because streamer discharge is generated, with the film of water serving as a base. This prevents the tip of the discharge electrode (31) from degradation and the corrosion of the discharge electrode (31) in association with such degradation is also avoided. Furthermore, the continuous supply of new moisture is provided to the tip of the discharge electrode (31), thereby preventing the tip of the discharge electrode (31) from contamination.

With the generation of such a streamer discharge, active species, such as fast electrons, ions, ozone, radicals, excited molecules et cetera, are generated in an electric discharge field between the discharge electrode (31) and the ejector (32). These active species come into gas-liquid contact with the treatment target water (32a), and are absorbed in the treatment target water (32a), at which time the treatment target water emitted from the ejector (32) is in the form of fine granular liquid droplets (32a), thereby enhancing the efficiency of gas-liquid contact between the treatment target water (32a) and the active species and therefore promoting the absorption of the active species into the treatment target water (32a). The active species are absorbed into the treatment target water (32a), whereby the treatment target water (32a) is sterilized, and pollutants present in the treatment target water (32a) are oxidatively decomposed.

In addition, with regard to the generation of radicals in the streamer discharge, it is known that the presence of water (H₂O) facilitates the generation of hydroxyl radical (OH radical), hydroperoxide (HO₂), or hydrogen peroxide water (H₂O₂). And in the liquid treatment apparatus (30) of the present embodiment, streamer discharge is directly generated to the treatment target water (32a) containing moisture. Consequently, with the generation of such streamer discharge, OH radicals, HO₂, H₂O₂ et cetera are generated in large quantities, whereby the effect of sterilizing the treatment target water (32a) is improved. In addition, owing to the direct generation of the streamer discharge to the treatment target water (32a), it becomes possible to accomplish a sterilizing effect by making use of a physical impact force in association with the generation of the electric discharge.

Subsequently, the treatment target water emitted from the ejector (32) is passed through the demister (35), as illustrated in FIG. 1. The demister (35) further accelerates the efficiency of gas-liquid contact between the remaining active species in the air and the treatment target water, whereby not only the effect of sterilizing the treatment target water but also the efficiency of purifying the treatment target water is improved. The demister (35) collects the treatment target water contained in the air. The air whose moisture content has been removed by the demister (35) is expelled outdoors through the air exhaust opening (13) as exhaust air. On the other hand, the treatment target water captured in the demister (35) falls, in the form of droplets, down to the reaction tank (15).

In the reaction tank (15), the treatment target water is further sterilized and purified by the active species absorbed therein. In addition, in the reaction tank (15), solid materials of relatively large specific gravity deposit on the bottom and accumulate as sludge. This sludge is expelled to outside the system of the liquid treatment tower (11) through the sludge discharge pipe (22) by properly opening the first switch valve (22a). On the other hand, the purified treatment target water (treated water) is expelled through the treated water discharge pipe (23) to outside the system of the liquid treatment tower (11).

### ADVANTAGEOUS EFFECTS OF THE FIRST EMBODIMENT

In the first embodiment, electric discharge is generated to the treatment target water (32a) emitted from the ejector (32), whereby active species generated in association with the generation of the electric discharge are absorbed in the treatment target water (32a). Consequently, in accordance with the first embodiment, bacteria present in the treatment target water (32a) can be killed effectively and the oxidative decomposition of pollutants contained in the treatment target water (32a) can be performed effectively. This therefore enables the liquid treatment apparatus (30) of the first embodiment to have extremely high purification power against the treatment target water (32a).

In addition, by the direct generation of electric discharge to the treatment target water (32a) as described above, it becomes possible to physically kill bacteria in the treatment target water (32a) by the force of impact of the electric discharge. Accordingly, it becomes possible to improve the liquid treatment apparatus (30) in its power to kill bacteria.

In the first embodiment, streamer discharge occurs from the discharge electrode (31) to the treatment target water (32a). The amount of generation of active species by the streamer discharge is greater as compared to other types of electric discharges, thereby making it possible to further improve the power to kill bacteria in the treatment target water (32a) and the power to purify the treatment target water (32a). In addition, if streamer discharge occurs from the discharge electrode (31) towards the treatment target water (32a), this produces a current of ionic wind in the same direction as the direction of the streamer discharge. Consequently, the efficiency of gas-liquid contact between the active species and the treatment target water (32a) is improved by the ionic wind, thereby making it possible to allow the active species to be absorbed efficiently in the the treatment target water (32a).

In the first embodiment, the liquid droplets (32a) in the form of fine grains are emitted from the ejector (32) and streamer discharge is generated to the liquid droplets (32a). Therefore, in accordance with the first embodiment, the occurrence of electric sparking is prevented by the function of air gaps defined between each liquid droplet (32a), thereby making it possible to stabilize the streamer discharge. Therefore, in accordance with the first embodiment, the amount of generation of active species is stabilized, thereby making it possible that the purification power of the liquid treatment apparatus (30), too, can be stabilized. In addition, if the treatment target water is in the form of fine grains, this makes it possible to further enhance the efficiency of gas-liquid contact between the liquid droplets (32a) and the active species.

In the first embodiment, the discharge electrode (31) and the ejector (32) are arranged so as to face each other. Therefore, in accordance with the first embodiment, it becomes possible to further improve the efficiency of gas-liquid contact between the treatment target water (32a) and the active species. In addition, if the treatment target water (32a) emitted from the ejector (32) is made to splash in the direction of the discharge electrode (31), this makes it possible to remove dust particles or contaminants adhering to the surface of the discharge electrode (31) with the splashed treatment target water (32a). Therefore, the frequency of cleaning and replacement of the discharge electrode (31) can be reduced.

In addition, the treatment target liquid (32a) adhering to the surface of the discharge electrode (31) rides on a current of ionic wind flowing towards the ejector (32) from the discharge electrode (31) and gathers on the tip of the discharge electrode (31). As a result, a film of liquid is formed on the tip of the discharge electrode (31). Consequently, in the tip of the discharge electrode (31), the rise in its temperature is impeded even when electric discharge is generated, thereby preventing the tip of the discharge electrode (31) from becoming melted or oxidized. Therefore, the tip of the discharge electrode (31) can be prevented from degradation/wear damage, which results in a reduction in the frequency of replacement of the discharge electrode (31). If the tip of the discharge electrode (31) is prevented from undergoing wear damage (corrosion) as described above, this makes it possible to maintain the distance (design distance) between the discharge electrode (31) and the ejector (32) constant. To sum up, it is prevented in the first embodiment that the design distance expands with the corrosion of the discharge electrode (31), as a result of which it becomes possible to maintain desired streamer charges over a long period of time.

In the first embodiment, the treatment target water (32a) is emitted, in a hollow circular conical shape, from the ejector (32) and the tip of the discharge electrode (31) is positioned within the treatment target water (32a) emitted in such a pattern (hollow circular conical shape). Therefore, in accordance with the first embodiment, streamer discharge expands flaringly from the tip of the discharge electrode (31) toward the treatment target liquid (32a) therearound, whereby it becomes possible to widely generate active species. In addition, if the treatment target water is emitted in the shape of a hollow circular cone from the ejector (32), it is prevented that the treatment target liquid (32a) directly hits the tip of the discharge electrode (31), whereby it becomes possible to provide stable streamer discharges.

### SECOND EMBODIMENT OF THE INVENTION

A liquid treatment apparatus (30) according to a second embodiment of the present invention is of the type that is mounted in an indoor unit (41) of an air conditioning system (40) for performing air conditioning of an indoor space. This indoor unit (41) is formed by a wall type room air conditioner for general household usage.

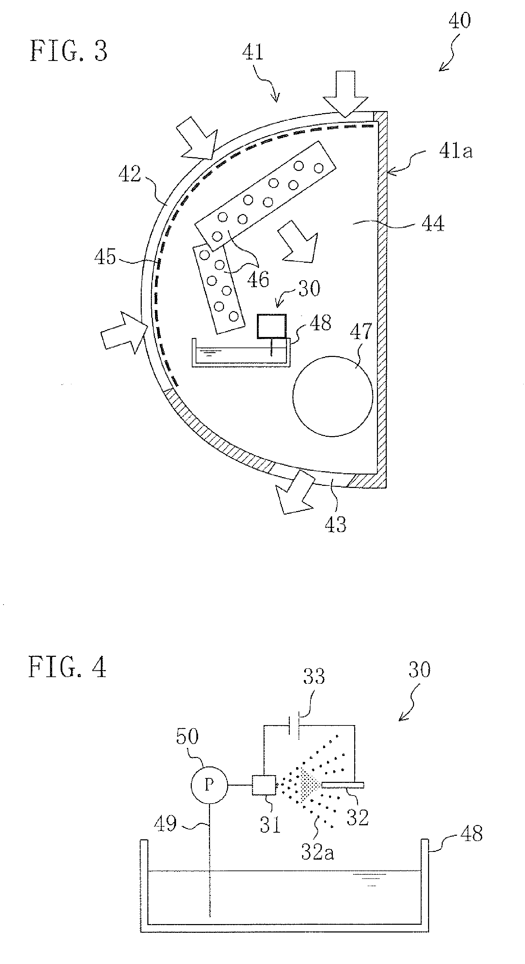

Referring to FIG. 3, the indoor unit (41) has a horizontally-elongated, substantially semi-cylindrical indoor casing (41a). The indoor casing (41a) is provided with an air inlet opening (42) formed along substantially the upper half of the front side (which is the left-hand side in FIG. 3), and an air outlet opening (43) formed in the lower end. The air inlet opening (42) constitutes an air introduction opening for the taking-in of indoor air into the indoor casing (41a). The air outlet opening (43) constitutes an air supply opening for the supply of air, temperature-controlled in the indoor unit (41), from within the indoor casing (4 1 a) to the indoor space.

An air passageway (44) through which air to be treated flows and which extends from the air inlet opening (42) to the air outlet opening (43) is formed within the indoor casing (41 a). A prefilter (45), an indoor heat exchanger (46), a fan (47), and a drain pan (48) are arranged in the air passageway (44).

The prefilter (45) is so disposed in the vicinity of the inside of the air inlet opening (42) as to extend along the air inlet opening (42). The prefilter (45) is disposed all over the air inlet opening (42). And the prefilter (45) constitutes a dust collecting means for collecting dust particles in the air to be treated.

The indoor heat exchanger (46) is connected through refrigerant piping to an outdoor unit (not shown), and constitutes a part of a refrigerant circuit in which the refrigerant is circulated to perform a refrigeration cycle. The indoor heat exchanger (46) constitutes an air heat exchanger of the so-called fin and tube type. The indoor heat exchanger (46) selectively functions as an evaporator or as a condenser depending on the direction in which the refrigerant is circulated in the refrigerant circuit. That is, the indoor heat exchanger (46) constitutes either a cooler means for the cooling of indoor air or a heating means for the heating of indoor air.

The drain pan (48) is arranged under the indoor heat exchanger (46). The drain pan (48) is a flat container with its open end in the upper side thereof. When the air to be treated is cooled in the indoor heat exchanger (46), moisture condensed in the air is recovered in the drain pan (48).

The liquid treatment apparatus (30) is mounted closely over the drain pan (48). The liquid treatment apparatus (30) is intended for condensate water as treatment target liquid recovered in the drain pan (48). That is, the liquid treatment apparatus (30) is for the purification of condensate water.

Referring to FIG. 4, the liquid treatment apparatus (30) includes a discharge electrode (31), an ejector (32), and an electric power supply (33), as in the first embodiment. In addition, one end of a condensate water suction pipe (49) is connected to the ejector (32). The other end of the condensate water suction tube (49) is open to the bottom of the drain pan (48). In addition, the condensate water suction pipe (49) is provided with a condensate water suction pump (50).

The discharge electrode (31) is formed by a rod- or needle-shaped electrode, as in the first embodiment. In the second embodiment, the discharge electrode (31) is supported in a position so that it extends horizontally. And, the nozzle of the ejector (32) is directed to the discharge electrode (31). The ejector (32) is configured such that it emits the condensate water in the form of granular liquid droplets (32a). Like the first embodiment, the electric power supply (33) establishes an electric potential difference between the discharge electrode (31) and the liquid droplets (32a) emitted from the ejector (32). As a result, streamer discharge occurs between the discharge electrode (31) and the liquid droplets (32a), as in the first embodiment.

### RUNNING OPERATION

The following is a description of the running operation of the air conditioning system (40) of the second embodiment. It should be noted that that the description is an exemplary description of the space cooling operation of the air conditioning system (40).

Referring to FIG. 3, when the air conditioning system (40) is operated, the fan (47) is placed in operation. In addition, low-pressure liquid refrigerant flows and passes in the indoor heat exchanger (46), and the indoor heat exchanger (46) functions as an evaporator.

The indoor air introduced into the indoor casing (41a) through the air inlet opening (42) is passed through the prefilter (45). The prefilter (45) filters dust particles from the air. The air, after passage through the prefilter (45), passes through the indoor heat exchanger (46). In the indoor heat exchanger (46), the refrigerant absorbs heat from the air, whereby the air is cooled. The air thus cooled is supplied through the air outlet opening (43) to the indoor space.

In the space cooling operation as described above, the moisture condensed in the indoor heat exchanger (46) accumulates, in the form of condensate water, within the drain pan (48). However, if the condensate water lingers in the drain pan (48) over a long period of time, this will cause the growth of bacteria in the condensate water, which contributes to the emission of unpleasant odors. To cope with this problem, in the air conditioning system (40) of the second embodiment, the liquid treatment apparatus (30) is scheduled to periodically purify the condensate water accumulated in the drain pan (48).

More specifically, when the liquid treatment apparatus (30) is operated, the condensate water suction pump (50) is placed in operation and the electric power supply (33) is turned on. As a result, the condensate water accumulated in the drain pan (48) is passed through the condensate water suction tube (49) and is then emitted in the horizontal direction from the ejector (32). Consequently, in the liquid treatment apparatus (30), streamer discharge occurs between the discharge electrode (31) and the ejector (32), as in the first embodiment (see FIG. 4).

Active species produced by the streamer discharge are absorbed in the condensate water (32a) emitted from the ejector (32). As a result, the condensate water (32a) is sterilized. The condensate water (32a) thus sterilized is again recovered in the drain pan (48). Such operation of the liquid treatment apparatus (30) is periodically carried out, for example, when the air conditioning system (40) is at rest. This ensures the prevention of the growth of bacteria in the condensate water.

In addition, if the liquid treatment apparatus (30) is operated when the air conditioning system (40) is stopped, this causes the spreading of active species, produced in association with the generation of the streamer discharge, within the indoor casing (41 a). As a result, the prefilter (45), the indoor heat exchanger (46), the drain pan (48) and so on are sterilized and deodorized, whereby the inside of the indoor casing (41a) remains clean at all times. In addition, it is desirable that the air inlet opening (42) and the air outlet opening (43) be closed with a closing member, such as a cover, a flap et cetera when the liquid treatment apparatus (30) is being operated. This makes it possible to confine the active species, produced in association with the operation of the liquid treatment apparatus (30), within the indoor casing (41a), thereby improving the effect of sterilization and deodorization in the indoor casing (41 a).

### ADVANTAGEOUS EFFECTS OF THE SECOND EMBODIMENT

In the second embodiment, the liquid treatment apparatus (30) similar to that of the first embodiment is utilized for the purification of condensate water in the air conditioning system (40). Therefore, in accordance with the second embodiment, the condensate water can be kept clean at all times, whereby the emission of unpleasant odors from and pollution of the condensate water is prevented from happening. In addition, the liquid treatment apparatus (30) has markedly high purification power and can be designed in compact size, whereby, even if the liquid treatment apparatus (30) is incorporated into the air conditioning system (40), this will not cause any increase in size of the air conditioning system.

### MODIFICATION OF THE SECOND EMBODIMENT

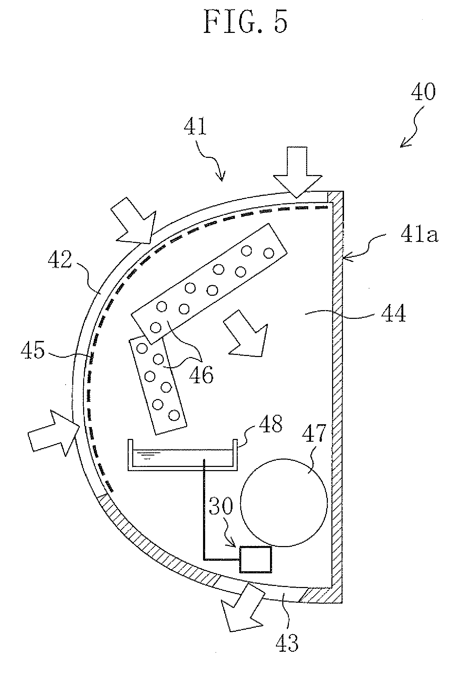

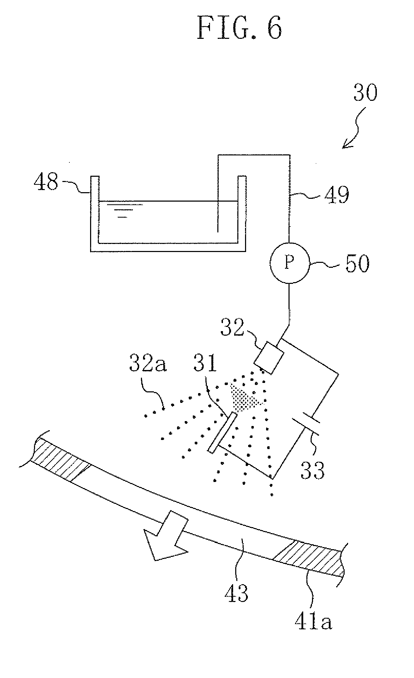

As shown in FIGS. 5 and 6, the treatment target liquid (condensate water) (32a) emitted from the ejector (32) may be released into a stream of air flowing in the air passageway (44). That is, in the present modification, the liquid treatment apparatus (30) is operated and the condensate water (32a) after purification is released in the air, whereby the indoor space is humidified. In addition, in this operation, the active species produced in association with the generation of the streamer discharge are supplied, together with either the air to be treated or the moisture emitted from the ejector (32), to the indoor space. Consequently, in the present modification, it is possible to provide, at the same time, humidification and purification of the indoor space.

### THIRD EMBODIMENT OF THE INVENTION

A liquid treatment apparatus (30) according to a third embodiment of the present invention is of the type that is mounted in an outdoor unit (51) of an air conditioning system (40) for performing air conditioning of an indoor space.

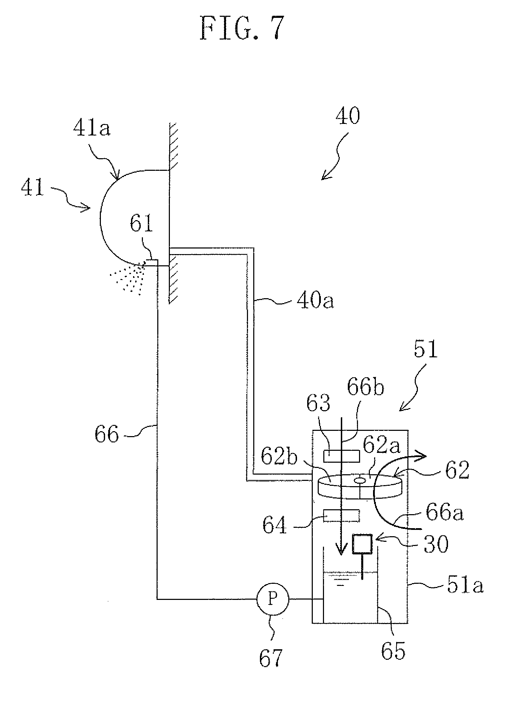

As illustrated in FIG. 7, the air conditioning system (40) has a wall type indoor unit (41). The indoor unit (41) includes, as in the second embodiment, a prefilter, an indoor heat exchanger, a fan and so on (which are not shown in the figure). In addition, the air outlet opening of the indoor unit (41) is provided with a nozzle (61) for humidification whose details will be described later. That is, the air conditioning system (10) of the third embodiment is formed of an air conditioning system equipped with a humidification unit (humidifier).

On the other hand, the outdoor unit (51) is arranged outdoors. The outdoor unit (51) is connected to the indoor unit (41) via interunit piping (40a) through which the refrigerant flows. In addition, the outdoor unit (51) has an outdoor casing (51a) shaped like a rectangle. The outdoor casing (51a) contains an outdoor heat exchanger, a compressor, an outdoor fan and so on (which are not shown in the figure). In addition, the outdoor casing (51a) houses an adsorptive rotor (62), a heater (63), a cooler (64), and a humidification water tank (65).

The adsorptive rotor (62) is shaped like a flat circular cylinder. A rotary shaft is passed through along the center of axle of the adsorptive rotor (62). In addition, the surface of the adsorptive rotor (62) supports thereon an adsorbent for the adsorption of moisture. In addition, sectionally defined within the outdoor casing (51a) are an adsorptive passageway (66a) and a regenerative passageway (66b), through both of which the outdoor air flows and passes. The adsorptive rotor (62) is configured rotatably while lying astride these passageways (66a, 66b). And in the adsorptive rotor (62), an adsorptive zone (62a) is formed in a region facing the adsorptive passageway (66a) while a regenerative zone (62b) is formed in a region facing the regenerative passageway (66b).

In the regenerative passageway (66b), the heater (63) is arranged upstream, relative to the flow of outdoor air, of the adsorptive rotor (62). The heater (63) heats outdoor air about to flow through the regenerative zone (62b) of the adsorptive rotor (62). In addition, in the regenerative passageway (66b), the cooler (64) is arranged downstream, relative to the flow of outdoor air, of the adsorptive rotor (62). The cooler (64) cools outdoor air after passage through the regenerative zone (62b) of the adsorptive rotor (62).

The humidification water tank (65) is arranged under the cooler (64). The humidification water tank (65) recovers moisture in the air condensed in the cooler (64) and stores it as humidification water. In addition, one end of the humidification water supply pipe (66) is connected to the humidification water tank (65). The other end of the humidification water supply pipe (66) is connected to the humidification nozzle (61). In addition, the humidification water supply pipe (66) is provided with a humidification water supply pump (67).

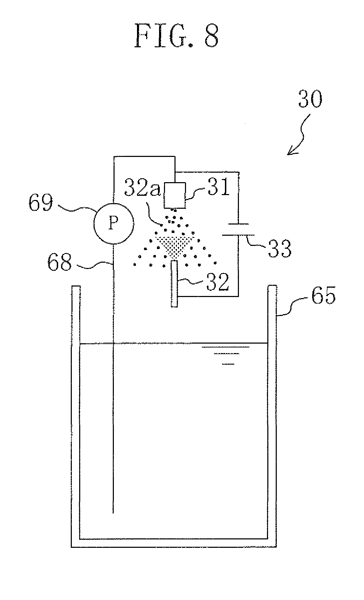

As shown in FIG. 8, the liquid treatment apparatus (30) is mounted closely over the humidification water tank (65). The liquid treatment apparatus (30) is intended for the treatment of humidification water recovered in the humidification water tank (65). That is, the liquid treatment apparatus (30) purifies the humidification water.

The liquid treatment apparatus (30) includes a discharge electrode (31), an ejector (32), and an electric power supply (33), as in each of the foregoing embodiments. In addition, one end of a humidification water suction pipe (68) is connected to the ejector (32). The other end of the humidification water suction pipe (68) is open to the bottom of the humidification water tank (65). In addition, the humidification water suction pipe (68) is provided with a humidification water suction pump (69).

The discharge electrode (31) is formed by a rod- or needle-shaped electrode and is supported in a position so that it vertically extends. On the other hand, the ejector (32) is arranged above and opposite to the discharge electrode (31) and its nozzle faces downwardly. The electric power supply (33) establishes an electric potential difference between the discharge electrode (31) and the liquid droplets (32a) emitted from the ejector (32), as in the first embodiment. As a result, streamer discharge occurs between the discharge electrode (31) and the liquid droplets (32a), as in each of the foregoing embodiments.

### RUNNING OPERATION

The following is a description of the running operation of the air conditioning system (40) of the third embodiment. It should be noted that that the description is an exemplary description of the space heating operation of the air conditioning system (40).

In the air conditioning system (40) shown in FIG. 7, the fan within the indoor unit (41) is placed in operation and, in addition, high-pressure gas refrigerant flows and passes in the indoor heat exchanger functioning as a condenser. Accordingly, in the indoor unit (41), air to be treated is heated in the indoor heat exchanger. The treated air (heated) is then routed in the vicinity of the humidification nozzle (61).

On the other hand, in the outdoor unit (51), outdoor air is introduced into the adsorptive passageway (66a) and into the regenerative passageway (66b). In addition, the adsorptive rotor (62) rotates about the axis of the rotary shaft at a predetermined speed.

The outdoor air flowing in the adsorptive passageway (66a) passes through the adsorptive zone (62a) of the adsorptive rotor (62). In the adsorptive zone (62a), moisture in the outdoor air is adsorbed to the adsorbent. The outdoor air after passage through the adsorptive zone (62a) is expelled to outside the outdoor casing (51a).

Meanwhile, the outdoor air flowing in the regenerative passageway (66b) is heated by the heater (63), and then passes through the regenerative zone (62b) of the adsorptive rotor (62). In the regenerative zone (62b), the adsorbent is heated by the outdoor air, whereby the moisture adsorbed to the adsorbent is desorbed. As a result, the moisture is given to the air flowing through the regenerative zone (62b) while the adsorbent of the regenerative zone (62b) is regenerated.

The outdoor air after passage through the regenerative zone (62b) passes through the cooler (64). When the outdoor air is cooled in the cooler (64), the moisture in the outdoor air condenses. The moisture condensed is recovered in the humidification water tank (65). In addition, the outdoor air used for the supply of moisture to the humidification water tank (65) is expelled to outside the outdoor casing (51a).

In the space heating/humidification operation, the humidification water supply pump (67) is placed in operation. As a result, the humidification water in the humidification water tank (65) is pumped up to the indoor unit (41) by way of the humidification water supply pipe (66). The humidification water is released from the humidification nozzle (61) to the air to be treated. As a result, moisture is given to the air to be treated flowing in the vicinity of the humidification nozzle (61). In the way as described above, the treated air (heated and humidified) is supplied through the air outlet opening to the indoor space.

As described above, in the air conditioning system (40) of the third embodiment, the moisture in the outdoor air is recovered in the humidification water tank (65) and the recovered humidification water is used to provide humidification of the indoor space. However, if such humidification water is stored within the humidification water tank (65) over long periods, this causes the growth of bacteria in the stored humidification water, thereby contributing to the emission of unpleasant odors. Besides, if the supply of humidification water of poor water quality is provided, as it is, to the indoor space, this produces damage to the room cleanliness. To cope with this, in the air conditioning system (40) of the third embodiment, the humidification water stored in the humidification water tank (65) is periodically purified using the liquid treatment apparatus (30).

More concretely, when the liquid treatment apparatus (30) is operated, the humidification water suction pump (69) is placed in operation and the electric power supply (33) is turned on. As a result, the humidification water accumulated in the humidification water tank (65) is emitted downwardly from the ejector (32) via the humidification water suction pipe (68). Consequently, in the liquid treatment apparatus (30), streamer discharge occurs between the discharge electrode (31) and the liquid droplets emitted from the ejector (32), as in the first embodiment (see FIG. 8).

Active species produced by the streamer discharge are absorbed in the humidification water emitted from the ejector (32). As a result, the humidification water is sterilized. The humidification water thus sterilized is recovered in the humidification water tank (65). Such operation of the liquid treatment apparatus (30) is periodically carried out, whereby the humidification water in the humidification water tank (65) is kept clean at all times.

In addition, if the liquid treatment apparatus (30) is operated in the manner as described above, this causes the active species produced by the streamer discharge to spread widely within the outdoor casing (51a). As a result, the adsorptive rotor (62), the humidification water tank (65), the outdoor heat exchanger and so on are sterilized and deodorized, whereby the inside of the outdoor casing (51a) is kept clean at all times.

### ADVANTAGEOUS EFFECTS OF THE THIRD EMBODIMENT

In the third embodiment, the liquid treatment apparatus (30) of the same type as in the first and second embodiments is used to purify the humidification water (32a) in the humidification water tank (65). Consequently, in accordance with the third embodiment, it becomes possible to keep the humidification water (32a) clean at all times, thereby avoiding not only the emission of unpleasant odors from the humidification water (32a) but also the pollution of the condensate water (32a). Besides, the liquid treatment apparatus (30) can be designed so that it has extremely superior purification power and is compact in size, and the outdoor casing (51a), even when the liquid treatment apparatus (30) is incorporated in the outdoor unit (51), will not grow in size.

### MODIFICATION OF THE THIRD EMBODIMENT

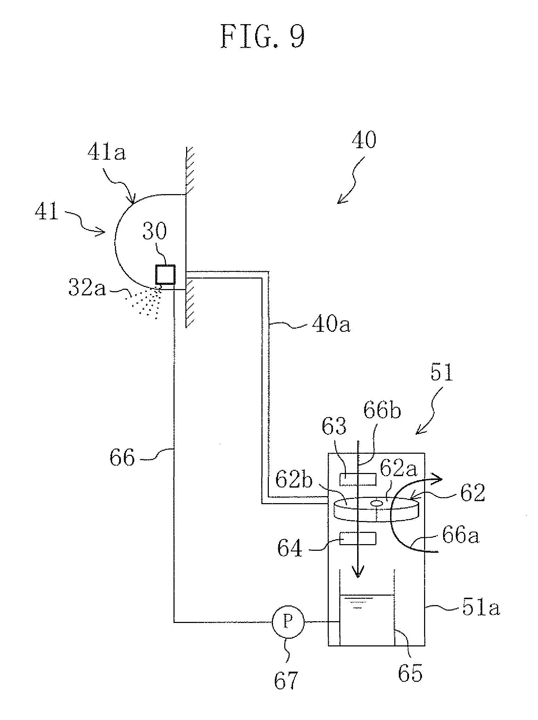

It may be possible that the liquid treatment apparatus (30) is arranged in the vicinity of the air outlet opening in the indoor unit (41) and the humidification water emitted from the ejector (32) of the liquid treatment apparatus (30) is released to the air to be treated, as shown in FIG. 9. That is, in this modification, the humidification water purified in the liquid treatment apparatus (30) is released directly to the air to be treated, whereby the indoor space is humidified. In this operation, the active species produced in association with the generation of the streamer discharge are supplied, together with either the air to be treated or moisture emitted from the ejector (32), to the indoor space. Consequently, in this modification, it is possible to provide humidification of the indoor space and purification of the indoor space by the active species.

### FOURTH EMBODIMENT OF THE INVENTION

A liquid treatment apparatus (30) according to a fourth embodiment of the present invention is of the type intended for mounting in a humidifier (70) configured to humidify an indoor space.

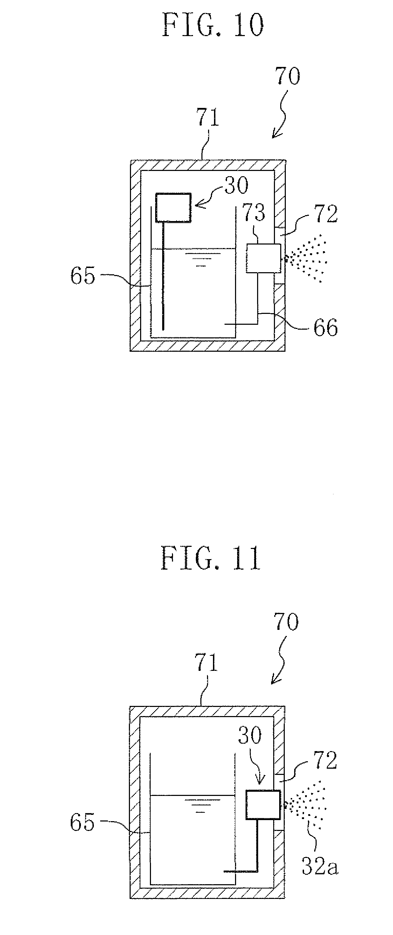

As shown in FIG. 10, the humidifier (70) is provided with a humidification casing (71) shaped like a rectangle. The humidification casing (71) is provided, in its side, with a humidification air outlet opening (72). In addition, the humidification casing (71) houses, in addition to the liquid treatment apparatus (30), a humidification water tank (65) and a vapour generation unit (73).

The humidification water tank (65) holds humidification water. In addition, the humidification casing (71) is provided, in its top, with an humidification water supply inlet opening so that the supply of humidification water is provided if required.

The vapor generation unit (73) is arranged in the vicinity of the humidification air outlet opening (72). The vapor generation unit (73) is connected through the humidification water supply pipe (66) to the humidification water tank (65). In the vapor generation unit (73), the humidification water is heated to change to vapor and the vapor is then supplied through the humidification air outlet opening (72) into the indoor space.

Like the third embodiment, the liquid treatment apparatus (30) of the fourth embodiment includes a discharge electrode (31), an ejector (32), an electric power supply (33), a humidification water suction pipe (68), and a humidification water suction pump (69) (see FIG. 8). In the liquid treatment apparatus (30), streamer discharge occurs between the discharge electrode (31) and the humidification water (32a), whereby the humidification water (32a) is sterilized, as in the third embodiment.

### ADVANTAGEOUS EFFECTS OF THE FOURTH EMBODIMENT

Also in the fourth embodiment, the humidification water (32a) can be kept clean at all times because the humidification water (32a) in the liquid treatment apparatus (30) is purified. This therefore prevents not only the emission of unpleasant odors from the humidification water (32a) held in the humidification water tank (65) but also the pollution of the humidification water (32a).

### MODIFICATION OF THE FOURTH EMBODIMENT

It may be possible to arrange, in the vicinity of the humidification air outlet opening (72), the liquid treatment apparatus (30) as a substitute for the vapor generation unit (73) of the fourth embodiment so that the humidification water emitted from the ejector (32) of the liquid treatment apparatus (30) is released into the indoor space. That is, in this modification, the humidification water purified by the liquid treatment apparatus (30) is released directly to the air to be treated, whereby the indoor space is humidified. Consequently, also for the case of the humidifier (70) of the present modification, active species are produced in association with the generation of the streamer discharge and supplied, together with moisture, to the indoor space. Consequently, also in this modification, the indoor space is humidified and purified with the aid of the active species.

### OTHER EMBODIMENTS

Each of the foregoing embodiments may be configured as follows.

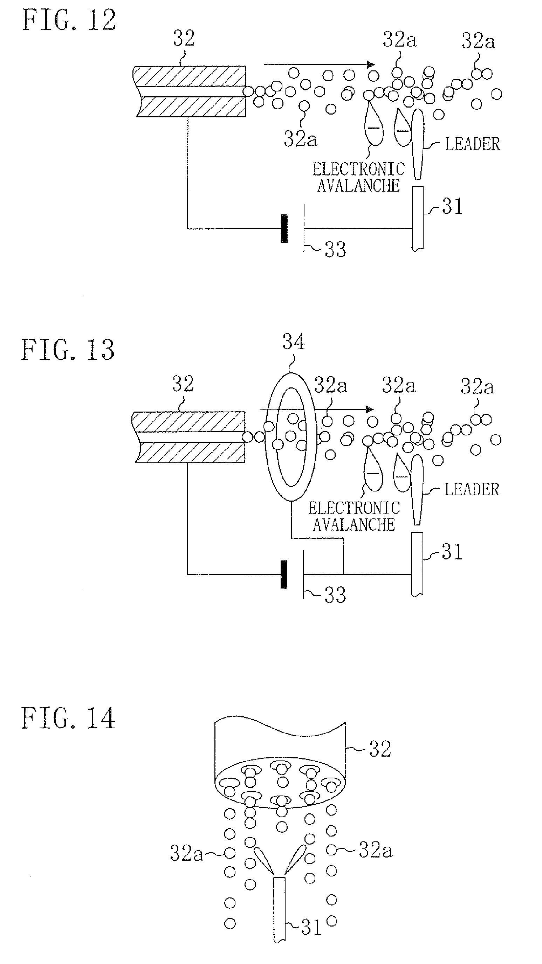

It may be configured such that the liquid droplets (32a) are emitted linearly from the ejector (32) while the tip of the discharge electrode (31) is oriented sideways to the flow of the liquid droplets (32a) travelling linearly, as shown in FIG. 12. Also in this example, streamer discharge is generated to the granular liquid droplets (32a), thereby making it possible to inhibit the occurrence of electric sparking to stabilize the streamer discharge.

As shown in FIG. 13, it is possible to use a guiding tool (34) shaped like a ring through which the liquid droplets (32a) emitted from the ejector (32) pass. In this example, electronic avalanche is more likely to occur from the liquid droplets (32a) as compared to the example of FIG. 12, thereby making it possible to further stabilize the streamer discharge.

As shown in FIG. 14, the ejector (32) may be of the funnel type. In the ejector (32), a plurality of emission openings are formed such that these emission openings open downwardly, whereby liquid droplets fall down towards the discharge electrode (31). Also in this example, the streamer discharge can be stabilized.

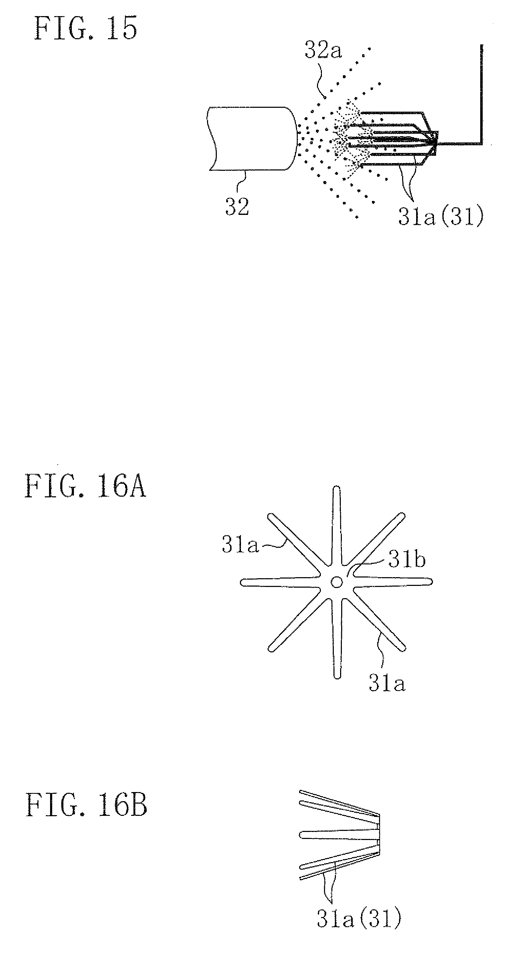

As shown in FIG. 15, the discharge electrode (31) may be one that has a plurality of needle-shaped electrodes (31a). In this example, streamer discharge occurs from the tip of each needle-shaped electrode (31a) towards the liquid droplets (32a). This configuration expands the electric discharge region of the streamer discharge, and the amount of generation of active species also increases. In addition, even when the electric discharge generated from some of the needle-shaped electrodes (31a) is unstable, the performance can be guaranteed by the electric discharge generated from the other needle-shaped electrodes (31a).

In addition, the discharge electrode (31) can be prepared as follows. That is, a thin plate of, for example, stainless steel is formed into a shape having a plurality of needle parts (31a) each radially extending from a center part (31b), as shown in FIG. 16(A). Then, the thin plate thus shaped is bent as shown in FIG. 16(B) to thereby obtain the discharge electrode (31).

Furthermore, as the electric power supply (33) of the liquid treatment apparatus (30), either a dc high voltage type electric power supply or a pulse type high voltage electric power supply may be employed. In addition, in each of the foregoing embodiments, the discharge electrode (31) serves as a positive side while the ejector (32) serves as a negative side. Conversely to this, it may be arranged such that the discharge electrode (31) serves as a negative side while the ejector (32) serves as a positive side, thereby to provide an electric potential difference therebetween.

It should be noted that the above-described embodiments are merely preferable exemplifications in nature and are no way intended to limit the scope of the present invention, its application, or its application range.

### INDUSTRIAL APPLICABILITY

As has been described above, the present invention finds utility for liquid treatment apparatuses intended for treatment target liquid and for air conditioning systems and humidifiers that are provided with such a liquid treatment apparatus.

## Claims

1. A liquid treatment apparatus for the purification of a treatment target liquid, comprising:
an ejector which emits the treatment target liquid;
a discharge electrode which generates an electric discharge towards the treatment target liquid emitted from the ejector; and
an electric power supply which establishes an electric potential difference between the treatment target liquid emitted from the ejector and the discharge electrode.

2. The liquid treatment apparatus of claim 1, wherein a streamer discharge is generated towards the treatment target liquid.

3. The liquid treatment apparatus of claim 2, wherein the ejector is configured such that it emits the treatment target liquid in the form of granular liquid droplets.

4. The liquid treatment apparatus of claim 2,
wherein the ejector is configured such that it emits the treatment target liquid towards the discharge electrode; and
wherein the tip of the discharge electrode is directed towards the ejector.

5. The liquid treatment apparatus of claim 4,
wherein the ejector is configured such that it emits the treatment target liquid in the shape of a hollow circular cone; and wherein the tip of the discharge electrode lies inside the treatment target liquid spread in the shape of the aforesaid hollow circular cone.

6. The liquid treatment apparatus of claim 2, wherein the ejector is configured such that it emits the treatment target liquid containing water.

7. An air conditioning apparatus comprising a cooler means for the cooling of air to be treated, a drain pan for the recovery of moisture condensed in the cooler means, and a liquid treatment apparatus intended for condensate water recovered in the drain pan,
wherein the liquid treatment apparatus is formed by any one of the liquid treatment apparatuses of claims 1-6.

8. The air conditioning apparatus of claim 7, wherein the liquid treatment apparatus releases, into the air to be treated, the condensate water emitted from the ejector so that the air to be treated is humidified.

9. A humidifier comprising a humidification water tank for the storage of humidification water that is released into air to be treated and a liquid treatment apparatus intended for the humidification water in the humidification water tank,
wherein the liquid treatment apparatus is formed by any one of the liquid treatment apparatuses of claims 1-6.

10. A humidifier comprising any one of the liquid treatment apparatuses of claims 1-6,
wherein the liquid treatment apparatus releases, into air to be treated, humidification water emitted from the ejector so that the air to be treated is humidified.
